# EUROPEAN PATENT SPECIFICATION

(11) **EP 4 577 446 B1**
(45) Date of publication and mention of the grant of the patent: **28.01.2026**
(21) Application number: 23726203.5
(22) Date of filing: 28.03.2023
(51) Int. Cl.: B60D 1/02, B60D 1/145, B62D 21/20, B62D 27/06, B62D 33/02

(54) **FORESTRY TRAILER, IN PARTICULAR FOR TRANSPORTING OF TIMBERS**
FORSTWIRTSCHAFTLICHER ANHÄNGER, INSBESONDERE ZUM TRANSPORT VON HOLZ
REMORQUE FORESTIÈRE, EN PARTICULIER POUR LE TRANSPORT DE BOIS

(30) Priority: 31.05.2022 SI 202200086
(43) Date of publication of application: 02.07.2025
(73) Proprietor: Tajfun Planina Proizvodnja Strojev, D.o.o., 3225 Planina Pri Sevnici (SI)
(72) Inventor: ARZENSEK, Nejc, 3231 Grobelno (SI)
(74) Representative: Borstar, Dusan
(86) International application number: PCT/SI2023/000003
(87) International publication number: WO 2023/234876

(56) References cited:
- EP-A2- 2 390 165
- SE-C2- 536 748
- US-A- 183 910

## Description

The invention refers to transporting, namely to land vehicles, except of railway vehicles, and in particular to trailers, which are suitable for being towed by a tractor. Pursuant to the International Patent Classification, such invention should belong to the class B 62 D 53/06.

In this, the invention is rest on a problem, how to conceive a forestry trailer, which should be, suitable for transporting of timbers or similar stable and substantially linear parts arranged in form of a bundle, wherein the constructional concept of the trailer should enable application of typical components, which could be easily changed or adjusted, with respect to their number or position, to specific needs of each particular user, in particular in view of the shape, quantity and the length of the cargo, which is expected to be transported by the trailer.

A trailer, which is suitable for transporting of timbers in the field of forestry, is disclosed in DE 36 20 328 A1and comprises a bearing assembly, which is formed of a part of I-profiles, which are spaced apart from each other and are connected with each other into an uniform structure by means of transversal binding beams. A driving assembly with an axle and a pair of wheels placed thereon is mounted on bottom surfaces of said I-profiles, which are faced towards the ground. Sufficiently rigid and U-shaped loading bridges, which are each per se arranged transversally with respect to said I-profiles and are spaced apart from each other in the longitudinal direction of said I-profiles, are mounted in pre-determined positions on the top surface of said I-profiles and are each per se furnished with a pair of vertical beams, which are firmly connected with said I-profiles and protrude in a direction upwardly i.e. away from the ground. Consequently, such trailer can be loaded with certain number of timbers, which are arranged between said vertical beams and which can be prior to transporting, e.g. by means of a chain, coupled to both terminal portions of said vertical beams secured by binding them in form of a bundle. As a consequence of such concept, such trailer as such is pretty heavy, which in view of a disposable power of a tractor and by taking into consideration also the weight of the tractor as such may have an essential impact to allowable cargo, which can be transported by such a trailer. In addition to that, configuration of the trailer is always determined in advance during the process of manufacturing thereof, which means that position of the driving assembly and arrangement of loading bridges with vertical beams are pre-determined and cannot be varied at all, so that adjusting of the trailer to actual needs of each particular user is possible only prior to finalization of the trailer during the process of manufacturing thereof, or e.g. by providing various types of trailers with various lengths and various number or arrangements of loading bridges.

Moreover, a forestry trailer is disclosed in EP 3 106 347 B1, which is furnished with a mechanism for adjusting of a driving assembly with wheels and which also comprises a bearing assembly, a driving assembly and loading bridges with vertical beams for securing the cargo in view of preventing it from displacements in the transversal direction. Said bearing assembly is formed as a planar framework, consisting of a pair of rectangular tubes, which are in parallel spaced apart from each other and are by means of transversal binding beams mutually connected to form an uniform bearing unit. Said rectangular tubes are within said framework oriented in such manner that, when observed in their transversal cross-sections, the shorter sidewall of each of them extends parallel to the ground, while the longer sidewall of each of them extends perpendicular to the ground. Also the transversal binding beams in form of rectangular tubes, which are equidistantly and in parallel with each other arranged along said pair of rectangular tubes parallel to each other, are actually oriented in the same manner. Consequently, such framework is pretty rigid and is capable to withstand to bending stresses in longitudinal and transversal direction, and also to torsion stresses around the central longitudinal geometric axis of the trailer, which extends throughout the trailer hitch.

Said driving assembly is a tandem assembly, which means that two wheels are available on the each side of the trailer, which are each per se freely rotatable mounted on the terminal portion of a pivoting beam, which is in its central region pivotally supported within a suitable housing. The housing with said pivoting beam and wheels on the one side of the trailer is via a suitable transversal beam firmly connected with the housing with the belonging pivoting beam and wheels on the other side of the trailer. Sad housings are together with belonging pivoting beams and wheels on both sides of the trailer displaceable along said longitudinal rectangular tubes of the bearing framework, wherein a hydraulic cylinder is mounted adjacent to each longitudinal rectangular tube, which is on the one hand connected with the housing of the pivoting beam with wheels, and on the other hand with one of said transversal binding beams of the bearing framework. Consequently, position of the driving assembly along the bearing framework can be amended and adjusted to the actual weight point of each particular cargo, wherein the driving assembly must then also be maintained in such adjusted position.

Positions of bearing bridges are however also in such trailer according to EP 3 106 347 B1 always determined in advance, and subsequently repositioning of bearing bridges with regard to actual needs of each particular user is not possible. Each loading bridge is namely on its side, which is faced toward the ground, furnished with a pair of cylindrical protrusions, which protrude towards the ground. On the other hand, tubular seats are welded on the bearing framework at suitable distance apart from each other, which are intended to receive said cylindrical protrusions. On the one hand this means that a sufficient clearance i.e. a difference between the external diameter of the cylindrical protrusion and the inner diameter of the tubular seat must be assured, since on the contrary unhindered placement of loading bridges would not be feasible at all due to jamming. This may in particular be problematic after a long-term use, where also the corrosion and impurities on the surface practically cannot be avoided. However, said clearance among others leaves some freedom to the loading bridges within said seats, so that the loading bridges can be displaced within said seats, in particular tilted forward or rearward with respect to a direction, in which the trailer is moving. In particular by moving of an unloaded trailer, the loading bridges are randomly moved, tilted and vibrated, which generates essential noise, so that towing such trailer either in urbanized areas or in the forest may really be unpleasant. Briefly, such concept does not allow adjusting positions of loading bridges, although an essential effort has been achieved in view of adjusting of position of the driving assembly. Moreover, configuration of the driving assembly as such can also not be modified at all, although in certain circumstances the presence of a single wheel in each side of the trailer would be quite sufficient.

Still further, a chassis for a semi-trailer is disclosed in US 2016/0311470 A1, which includes a telescopic bearing assembly, which is functioning, at least at a first glance, as an uniform linear bearing member. However, also in this case and similarly like in , the bearing framework is formed of a pair of longitudinal tubes, which are spaced apart from each other and are by means of transversal binding beams firmly interconnected into a planar framework, which is then embedded with a C-profile. Such a framework is intended for mounting of a transporting platform there-on, and using of e.g. loading bridges is not foreseen at all.

Forestry trailers as such are also disclosed in SE 536 748 C2, EP 2 390 165 A2 and US 183 910 A1. SE 536 748 C2 discloses a forestry trailer according to the preamble of claim 1.

The present invention refers to a forestry trailer, in particular to a trailer for transporting of timbers. Such trailer generally comprises a bearing assembly, which is maintained at a sufficient distance apart from the ground and is to this aim supported by a driving assembly, which comprises at least one pair of mutually coaxial and freely rotatable wheels which are each per se arranged on each lateral side of the trailer. Said bearing assembly is in its first terminal area furnished with a towing hitch, which is adapted for establishing of a reliable, by maneuvering with the trailer in various directions freely pivotal and optionally also detachable interconnection between the trailer and each disposable towing vehicle, in particular a tractor. Moreover, at least two in the longitudinal direction of the trailer apart from each other arranged and substantially U-shaped loading bridges are mounted onto said bearing assembly, each of them comprising a horizontal beam, which is sufficiently rigid to take-over the weight of the cargo, as well as a pair of vertical beams, which are in transversal direction of the trailer spaced apart from each other and protrude in a direction away from the ground, and are capable for securing of a cargo, when it is arranged in form of a bundle, from falling down from the trailer in both lateral areas thereof. Position of said towing hitch on the bearing assembly is optionally changeable, and moreover, a mounting platform, which is suitable for attachment of a crane and/or of a framework with a protective grid, is optionally mounted onto said bearing assembly.

The invention proposes that said bearing assembly, which is supported by said driving assembly and is furnished with a towing hitch and at least two loading bridges arranged at a sufficient distance apart from each other in the longitudinal direction of the trailer, is conceived as an uniform longitudinal section of a square tube of a pre-determined length, which is rotated at 45° around its longitudinal geometric axis and is oriented in such manner, that its first diagonal of the transversal cross-section extends parallel to the ground, while the other diagonal extends perpendicular to the ground. Said driving assembly is in its central area, when observed in the transversal direction of the trailer, furnished with a triangular i.e. V-shaped groove, which is adapted to be rest on the one side of said bearing assembly in form of a square tube, as well as with a fastener, which is also furnished with a V-shaped groove and is adapted to be rest on the opposite side of said bearing member, so that said fastener is by means of screws pressed towards the driving assembly, while the bearing assembly is jammed between the driving assembly and the fastener in the area of said V-shaped grooves. Quite analogously, each of said loading bridges is, when observed in the transversal direction of the trailer, in the central area of its horizontal beam furnished with a triangular i.e. V-shaped groove, which is adapted to be rest on the one side of said bearing assembly, and is moreover furnished with a fastener, which is also furnished with a V-shaped groove, which is adapted to be rest on the opposite side of said bearing assembly, so that said fastener is by means of screws pressed towards the horizontal beam of the loading bridge, while the bearing assembly is jammed between the loading bridge and said fastener in the area of said grooves.

In the one of the embodiments of the invention, a secondary bearing member is also foreseen, which is tightly insertable into said square tubular bearing assembly on the second terminal area thereof, which is located opposite to said first terminal area with the towing hitch, wherein said secondary bearing member is also conceived as a linear section of a square tube and is displaceable along said bearing assembly, upon which it may be fixed in each desired position. Said secondary bearing member is preferably fixed in each desired position relative to the bearing assembly by means of screws. Said secondary bearing member is preferably also adapted for receiving of at least one loading bridge, which is furnished with a V-shaped groove and is attached to it by means of a fastener with a V-shaped groove, namely by means of screws, which serve for interconnecting said loading bridge and the fastener, by which the secondary bearing member is jammed between the loading bridge and the fastener.

The loading bridge, which is located at the longest distance apart from the towing hitch, is furnished with a light signaling unit, which is located in the area of its horizontal beam, faced in a direction away from the towing hitch, and is in the area of the towing hitch electrically connectable with a towing vehicle.

Said trailer is in the first terminal area of the bearing assembly, where the towing hitch is located, optionally furnished with a substantially box-shaped coupling casing, by which said square tube of the bearing assembly is embedded from at least two sides thereof. Said coupling casing comprises two horizontally oriented binding plates, which are arranged one above the other and extend parallel with each other, namely a top binding plate and a bottom binding plate, which are each per se in the area of abutting each belonging corners of said square tubular bearing assembly furnished with grooves, and at least four positioning spacers are inserted between said plates, so that each of said spacers is screwed both to the top binding plate and also to the bottom binding plate. Each of said spacers is furnished with a centrally arranged groove, which is adapted to cooperate with a rectangular corner area of each adjacent edge of the square tubular bearing assembly, and moreover, said positioning spacers are arranged in such a manner that at least two positioning spacers, which are sufficiently spaced apart from each other, are available on each side of said bearing assembly.

Said top binding plate of the mounting casing is adapted for supporting of a mounting plate, which is placed directly on it and is moreover also screwed onto it. In one of possible embodiments of the trailer, said mounting plate is adapted for attachment of a crane, which is screwed onto said mounting plate. The invention further provides a possibility that said mounting plate is adapted for receiving of a framework with a protecting grid, which is attachable to said mounting plate by means of screws. In addition to that, the trailer according to the invention can also be furnished with a telescopic supporting leg, which is extendable in a direction towards the ground and is adapted to be rest on the ground, and which is, similarly like the driving assembly and the loading bridges, furnished with triangular i.e. V-shaped groove, which is adapted to be rest onto the one side of said square tubular bearing assembly, as well as with a fastener, which is also equipped with a V-shaped groove and adapted to be rest on the opposite side of said bearing assembly, so that said fastener is by means of screws pressed towards the supporting leg, and the bearing assembly is jammed between the supporting leg and its belonging fastener in the area of both previously mentioned V-shaped grooves.

The invention will be described in more detail on the basis of embodiments, as presented in the attached drawings, wherein
- Fig. 1: is a forestry trailer according to the invention, namely a ready to use tractor trailer for transporting of timbers, presented in isometric view;
- Fig. 2: is also a trailer furnished with a chassis and wheels, also in isometric view;
- Fig. 3: is a trailer according to Fig. 2, presented in orthogonal rear view;
- Fig. 4: presents a detail A according to Fig. 3;
- Fig. 5: presents a detail B according to Fig. 3;
- Fig. 6: presents a loading bridge, in isometric view;
- Fig. 7: presents a loading bridge according to Fig. 6, in front view;
- Fig. 8: presents a detail C according to Fig. 7;
- Fig. 9: presents a trailer coupling casing according to Fig. 2, in isometric view;
- Fig. 10: is a cross-section along the plane III - III according to Fig. 9;
- Fig. 11: is a further embodiment of the trailer according to Fig. 1, namely a trailer coupling casing according to Fig. 9 together with a crane mounting platform, in isometric view;
- Fig. 12: is a cross-section along the plane I - I according to Fig. 11;
- Fig. 13: is a cross-section along the plane II - II according to Fig. 11;
- Fig. 14: presents a trailer coupling casing together with a crane mounting platform, again in isometric view, however at different angle as in Fig. 11;
- Fig. 15: presents a trailer coupling casing together with a crane mounting platform and a towing hitch, in isometric view; and
- Fig. 16: presents a still further embodiment of a trailer with adjustable towing hitch.

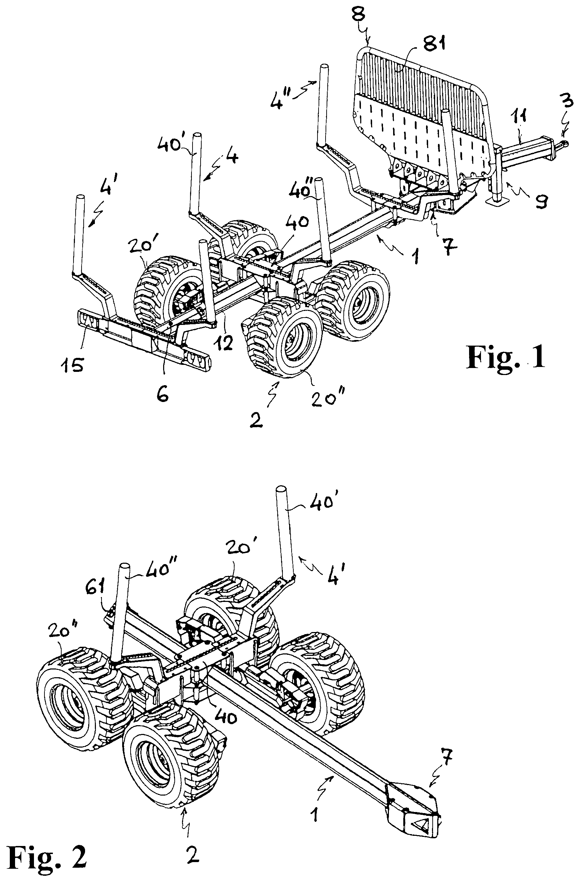

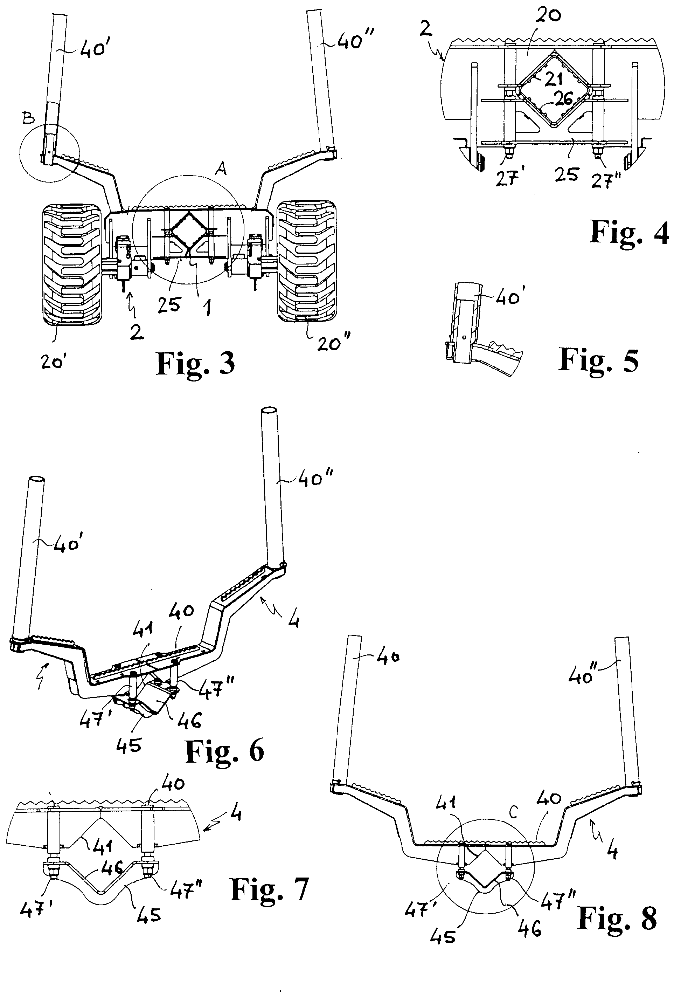

A forestry trailer, in particular a tractor trailer, which is suitable for transporting of timbers, and which is appropriately configured and in its ready-to-use state presented in Fig. 1, comprises a bearing assembly 1, which is at a suitable distance apart from the ground (Fig. 3) supported by means of a driving assembly 2, which generally comprises at least a pair of coaxially arranged and freely rotatable wheels 20', 20", which are each per se arranged laterally on each side of the trailer, although in the shown embodiment there are two wheels 20', 20" available on each side of the trailer, which are arranged one behind the other. Said driving assembly 2 may, without any particular influence to the invention as such, also include any other possible combinations in view of arrangement of said wheels 20', 20".

Said bearing assembly 1 is in its first terminal area 11 furnished with a towing hitch 3, which is adapted for establishing of a reliable, but also detachable mutual interconnection between the trailer and a towing vehicle, in particular a tractor, wherein said interconnection must allow freely movements in required directions in order to enable manoeuvers of the trailer by towing. Moreover, at least two substantially U-shaped loading bridges 4, 4', 4" are mounted on said bearing assembly 1 and are suitably spaced apart from each other in the longitudinal direction of said loading assembly 1. In the shown embodiment there are three loading bridges 4, 4', 4" available, and each of them comprises a horizontal beam 40, which is sufficiently rigid to take over the weight of each cargo, as well as a pair of vertically apart from the ground protruding vertical beams 40', 40", which are spaced apart from each other in a transversal direction of the trailer and are adapted to protect the cargo, although bound in a bundle, against undesired lateral removal from the trailer.

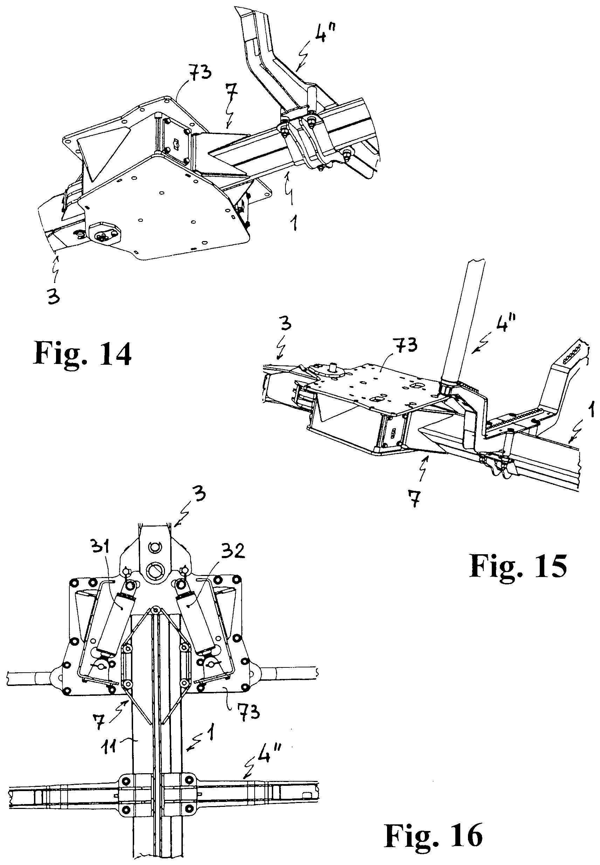

Position of said towing hitch 3 on said bearing assembly 1 may optionally also be changed. In one of the embodiments of the trailer, which is shown in Fig. 16, the towing hitch 3 may also be repositioned at certain angle relatively to the longitudinal geometric axis of the trailer, by which the radius of wheel path is changed, which results in changing of a moving direction of wheels 20', 20" when e.g. collision with obstacles should be avoided.

Moreover, a mounting platform 5 can be optionally attached onto said bearing assembly 1, which serves for mounting of a crane and/or a framework 8 with a protective grid 81 and which should be later-on explained in more detail.

Said bearing assembly 1, which is supported by the driving assembly 2 and furnished with said towing hitch 3 and said loading bridges 4, 4', 4", which are spaced apart from each other in the longitudinal direction of said bearing assembly 1, is according to the invention conceived as a, uniform longitudinal section of a straight square tube having a pre-determined length, which is however turned at 45° around its longitudinal geometric axis and is oriented in such a manner that the first diagonal of its square cross-section extends parallel to the ground, while the other diagonal extends perpendicularly to the ground.

Consequently, said driving assembly 2 is in its central area 20, when observed in the transversal direction of the trailer, furnished with a triangular i.e. V-shaped groove 21, which is adapted to be rest on the one side of said bearing assembly 1 in form of a square tube, and is moreover equipped with a fastener 25, which is also furnished with a V-shaped groove, which is intended to be rest on the opposite side of said bearing assembly 1. Said fastener 25 is by means of screws 27', 27" pressed towards the driving assembly 2, so that the bearing assembly 1 is firmly clamped between the driving means 2 and the fastener 25 in the area between said grooves 21, 26.

Moreover, each of said loading bridges 4, 4', 4" is, again observed in the transversal direction of the trailer, in a central area of its horizontal beam 40 furnished with a triangular i.e. V-shaped groove 41, which is adapted to be rest on the one side of said bearing assembly 1 in form of a square tube, and is moreover equipped with a fastener 45, which is also furnished with a V-shaped groove 46, which is adapted to be rest on the opposite side of said bearing assembly 1, so that said fastener 45 is by means of screws 47', 47" pressed towards said horizontal beam 40 of the loading bridge 4, 4', 4", while the bearing assembly 1 is clamped between the loading bridge 4, 4', 4" and the clamp 45 in the area of said grooves 41, 46.

As shown in Fig. 1, a secondary bearing member 6 in form of a square tube can be optionally in a properly tight manner inserted into said bearing member 1 in form of square tube in the one terminal area 12 thereof, which is located opposite to the other terminal area 11 with the towing hitch 3, wherein said secondary bearing member 6 is also conceived as a longitudinal section of a straight square tube and is displaceable along the bearing assembly 1, but can also be fixed in each desired position. In the shown embodiment, said secondary bearing member 6 is fixed in each desired position by means of screws 61, which are available in suitable threaded bores on said tubular bearing member 1. It should however be clear to each person skilled in the art that a required fixation of said secondary bearing member 6 in each desired position due to preventing its further movements along the bearing assembly 1 might also be achieved in other way. Said secondary bearing member 6 is, similarly like the bearing assembly 1 itself, adapted for receiving of at least one loading bridge 4' with a V-shaped groove 41, which may be mounted thereon by means of a fastener 45 with a V-shaped groove 46 and establishing of interconnection there-between by means of suitable screws 47', 47", upon which said secondary bearing member 6 is clamped between the horizontal area of said loading bridge 4' and the belonging fastener 45.

Whenever the trailer is completed for road transporting, then at least the loading bridge 4, 4', 4", which is located at the longest distance apart from the towing hitch 3, equipped with at least one light signaling unit 15, which is preferably located in the horizontal area thereof and on the side, which is faced away from the towing hitch 3, and is in the area of said towing hitch 3 electrically connectable with each disposable towing vehicle.

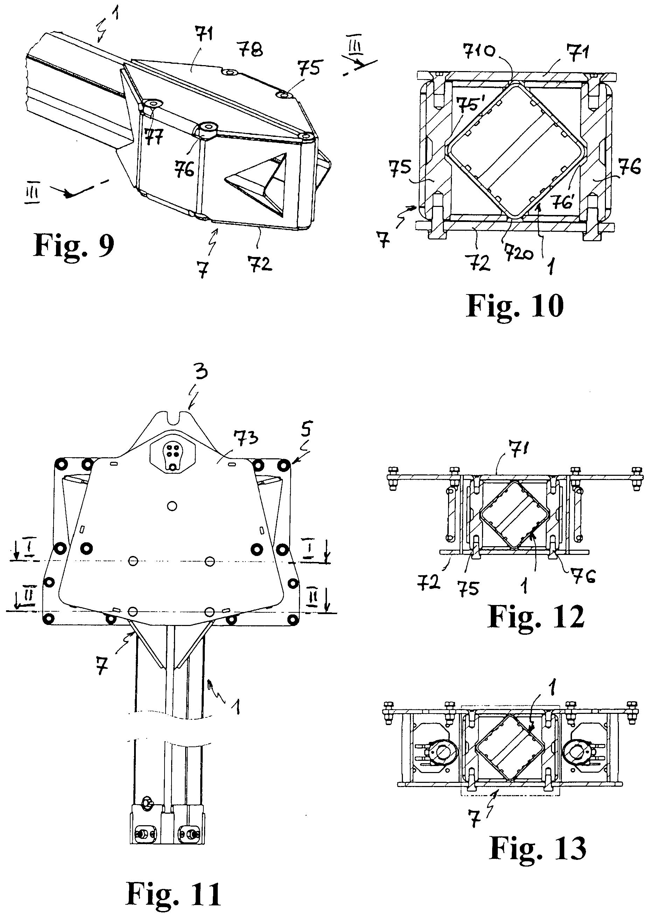

Still further, the trailer is in the terminal area 11 of its bearing assembly 1, in which said towing hitch 3 is mounted, furnished with a substantially box-shaped trailer coupling casing 7 (Fig. 2), by which said square tube of the bearing assembly 1 is surrounded on least two opposite sides thereof. Said trailer coupling casing 7 is used in particular in such cases, when the bearing assembly 1 is exposed to intensive forces, which may act to it from various directions, which may also change during the use. As shown in Figs. 10 - 15, said trailer coupling casing 7 comprises two sufficiently rigid binding plates 71, 72, namely the first binding plate 71 and the second binding plate 72, which are arranged in parallel above each other and are each per se in the area of contact with each belonging corner of the square tubular bearing assembly 1 furnished with suitable grooves 710, 720, while in the area between both binding plates 71, 72 four positioning spacers 75, 76, 77, 78 are present, which are each per se by means of suitable screws connected both with the top binding plate 71 and the bottom binding plate 72. Each of said spacers 75, 76, 77, 78 is furnished with a centrally arranged groove 75', 76', which is adapted to receive a belonging rectangular corner area of said square tubular bearing assembly 1. In this, said spacers 75, 76, 77, 78 are arranged in such manner so that on each side of said bearing assembly 1 at least two spacers 75, 76, 77, 78 are available, which are sufficiently spaced apart from each other. Moreover, said trailer coupling casing 7 is, e.g. by means of a not-shown transversal pin or in any other suitable manner, protected against undesired displacement in the longitudinal direction of the bearing assembly l.

The top binding plate 71 of said trailer coupling casing 7 is adapted for receiving of a mounting plate 73, or optionally of a suitable plane frame, which is placed and screwed directly thereon. Such mounting late 73 can be adapted for mounting of a crane, which is screwed onto the mounting plate 73. A foldable hydraulic crane, comprising a column with an arm, optionally a telescopic one, which is attached to said column, and suitable supporting legs, is quite a reasonable option, in which the bearing assembly 1 of trailer is required just to bear the weight of the crane as such, so that during the use of the crane the weight of each load and temporarily also the weight of the crane can be by means of said supporting legs completely transferred onto the ground.

In the shown embodiment according to Fig. 1, said mounting plate 73 is also adapted for receiving of a framework 8 with integrated protecting grid 81, wherein said framework 8 is also screwed onto the mounting plate 73. Said protective grid 81 is intended for protection during manipulation with the load in the area of the trailer and its adjacency, so that a safe area is established behind said grid 81, within which each potential collision between the load and the user, or also the towing vehicle, is made impossible.

The trailer according to Fig. 1 further comprises at least one supporting leg 9, which is, similarly like said driving assembly 2 or loading bridges 4, 4', 4", furnished with a V-shaped groove, which is adapted to be rest on the one side of said bearing assembly 1 in form of a square tube, and moreover also with a suitable fastener, which is also furnished with a V-shaped groove and is intended to be located on the opposite side of said bearing assembly 1, so that said fastener is by means of screws pressed towards the supporting leg 9, and that the bearing assembly 1 is in the area of said V-shaped grooves jammed between the supporting leg 9 and the belonging fastener. Said supporting leg 9 may also be useful both by parking of a loaded trailer, wherein an undesired rotation of the trailer around the axis of wheels 20', 20" can be limited to such extend that the towing hitch 3 is still maintained at a desired distance above the ground, and also by parking of unloaded trailer, since the supporting leg 9, when rest on the ground, prevents the trailer from uncontrolled displacements in the longitudinal direction thereof.

Those skilled in the art shall understand, without any doubt, that such constructional concept of the trailers allows application of typical components like said square tubular bearing assembly 1, which is optionally furnished also with a secondary bearing member 6, said loading bridges 4, 4', 4", said mounting casing 7 with the mounting plate 73 suitable for mounting of a crane and/or a framework 8 with a protective grid 81, said supporting leg 9 and the towing hitch 3, the position of which may, similarly like in several known prior art solutions, even be varied (Fig. 16) by means of hydraulic cylinders 31, 32 at a pre-determined angle displaced apart from the longitudinal geometric axis of the trailer in order to improve manoeuvering properties of the trailer in the view of avoiding collisions with various obstacles on the ground. Those skilled in the art shall also understand that thanks to previously disclosed concept of interconnection between the bearing assembly 1 and each disposable components of the trailers by means of simply screwing thereof, the number of components and also the position thereof may be simply determined on the basis of actual needs of each particular user, namely with regard to the cargo, which is intended to be transporting, and also by taking into consideration its quantity and the length thereof.

## Claims

1. Forestry trailer, in particular for transporting of timbers, comprising a bearing assembly (1), which is maintained at a sufficient distance apart from the ground and is to this aim supported by a driving assembly (2), comprising at least one pair of mutually coaxial and freely rotatable wheels (20', 20"), which are each per se arranged on each lateral side of the trailer, wherein said bearing assembly (1) is in its first terminal area (11) furnished with a towing hitch (3), which is adapted for establishing of a reliable, by maneuvering with the trailer in various directions freely pivotal and optionally also detachable interconnection between the trailer and each disposable towing vehicle, in particular a tractor, and moreover, at least two in the longitudinal direction of the trailer apart from each other arranged and substantially U-shaped loading bridges (4, 4', 4") are mounted onto said bearing assembly (1), each of them comprising a horizontal beam (40), which is sufficiently rigid to take-over the weight of the cargo, as well as a pair of vertical beams (40', 40"), which are in transversal direction of the trailer spaced apart from each other and protrude in a direction away from the ground, and are capable for securing of a cargo, when it is arranged in form of a bundle, from falling down from the trailer in both lateral areas thereof, wherein the position of said towing hitch (3) on the bearing assembly (1) is optionally changeable, and wherein a mounting platform (5), which is suitable for attachment of a crane and/or of a framework (8) with a protective grid (81), is optionally mounted onto said bearing assembly (1), **characterized in that** said bearing assembly (1), which is supported by said driving assembly (2) and is furnished with a towing hitch (3) and with at least two loading bridges (4, 4', 4") which are arranged at a sufficient distance apart from each other in the longitudinal direction of the trailer, is conceived as an uniform longitudinal section of a square tube of a pre-determined length, which is rotated at 45° around its longitudinal geometric axis and is oriented in such manner, that its first diagonal of the transversal cross-section extends parallel to the ground, while the other diagonal extends perpendicular to the ground, wherein said driving assembly (2) is in its central area (20), when observed in the transversal direction of the trailer, furnished with a triangular i.e. V-shaped groove (21), which is adapted to be rest on the one side of said bearing assembly (1) in form of a square tube, as well as with a fastener (25); which is also furnished with a V-shaped groove (26) and is adapted to be rest on the opposite side of said bearing member (1), so that said fastener (25) is by means of screws (27', 27") pressed towards the driving assembly (2), while the bearing assembly (1) is jammed between the driving assembly (2) and the fastener (25) in the area of said V-shaped grooves (21, 26), and wherein each of said loading bridges (4, 4', 4") is, when observed in the transversal direction of the trailer, in the central area of its horizontal beam (40) furnished with a triangular i.e. V-shaped groove (41), which is adapted to be rest on the one side of said bearing assembly (1), and is moreover furnished with a fastener (45), which is also furnished with a V-shaped groove (46), which is adapted to be rest on the opposite side of said bearing assembly (1), so that said fastener (45) is by means of screws (47', 47") pressed towards the horizontal beam (40) of the loading bridge (4, 4', 4"), and the bearing assembly (1) is jammed between the loading bridge (4, 4', 4") and said fastener (45) in the area of said grooves (41, 46).

2. Trailer according to Claim 1, **characterized in that** a secondary bearing member (6) is tightly insertable into said square tubular bearing assembly (1) on its second terminal area (12), which is located opposite to said first terminal area (11) with the towing hitch (3), wherein said secondary bearing member is also conceived as a linear section of a square tube and is displaceable along said bearing assembly (1), upon which it may be fixed in each desired position.

3. Trailer according to Claim 2, **characterized in that** said secondary bearing member (6) is fixed in each desired position relative to the bearing assembly (1) by means of screws (61).

4. Trailer according to anyone of Claims 2 or 3, **characterized in that** said secondary bearing member (6) is adapted for receiving of at least one loading bridge (4'), which is furnished with a V-shaped groove (41) and is attached to it by means of a fastener (45) with a V-shaped groove (46), namely by means of screws (47', 47'') interconnecting said loading bridge (4') and the fastener (46), by which the secondary bearing member (6) is jammed between the loading bridge (4') and the fastener (45).

5. Trailer according to anyone of the preceding Claims, **characterized in that** at least that loading bridge (4, 4', 4") which is located at the longest distance apart from the towing hitch (3), is furnished with a light signaling unit (15), which is located in the area of its horizontal beam (40), faced in a direction away from the towing hitch (3) and is in the area of the towing hitch (3) electrically connectable with a towing vehicle.

6. Trailer according to anyone of the preceding Claims, **characterized in that** in the terminal area (11) of the bearing assembly (1), in which the towing hitch (3) is located, said trailer is furnished with a substantially box-shaped coupling casing (7), by which said square tube of the bearing assembly (1) is embedded from at least two sides thereof, wherein said coupling casing (7) comprises two horizontally oriented binding plates (71, 72), which are arranged one above the other and extend parallel with each other, namely a top binding plate (71) and a bottom binding plate (72), which are each per se in the area of abutting each belonging corner of said square tubular bearing assembly (1) furnished with grooves (710, 720), and at least four positioning spacers (75, 76, 77, 78) are inserted between said plates (71, 72), so that each of said spacers (75, 76, 77, 78) is screwed both to the top binding plate (71) and also to the bottom binding plate (72), and wherein each of said spacers (75, 76, 77, 78) is furnished with a centrally arranged groove (75, 76'), which is adapted to cooperate with a rectangular corner area of each adjacent edge of the square tubular bearing assembly (1), and wherein said positioning spacers (75, 76, 77, 78) are arranged in such a manner, that at least two positioning spacers (75, 76, 77, 78), which are sufficiently spaced apart from each other, are available on each side of said bearing assembly (1).

7. Trailer according to Claim 6, **characterized in that** said top binding plate (71) of the mounting casing (7) is adapted for supporting of a mounting plate (73), which is placed directly on it and is also screwed onto it.

8. Trailer according to Claim 7, **characterized in that** said mounting plate (73) is adapted for attachment of a crane, which is screwed onto said mounting plate (73).

9. Trailer according to Claim 7, **characterized in that** said mounting plate (73) is adapted for receiving of a framework (8) with a protecting grid (81), which is attachable to said mounting plate (73) by means of screws.

10. Trailer according to anyone of the preceding Claims, **characterized in that** it is moreover furnished with a telescopic supporting leg (9), which is extendable in a direction towards the ground and is adapted to be rest on the ground, and which is, similarly like the driving assembly (2) and the loading bridges (4, 4', 4"), furnished with triangular i.e. V-shaped groove, which is adapted to be rest onto the one side of said square tubular bearing assembly (1), as well as with a fastener, which is also equipped with a V-shaped groove and adapted to be rest on the opposite side of said bearing assembly (1), so that said fastener is by means of screws pressed towards the supporting leg, and the bearing assembly (1) is jammed between the supporting leg (9) and its belonging fastener in the area of both previously mentioned V-shaped grooves.

## Patentansprüche

1. Forstwirtschaftlicher Anhänger, insbesondere zum Transport von Holz, umfassend eine Lageranordnung (1), die in einem ausreichenden Abstand zum Boden gehalten wird und zu diesem Zweck von einer Antriebsanordnung (2) getragen ist, umfassend mindestens ein Paar von zueinander koaxial angeordneten und frei drehbaren Rädern (20', 20"), die jeweils für sich auf jeder seitlichen Seite des Anhängers angeordnet sind, wobei die Lageranordnung (1) in ihrem ersten Endbereich (11) mit einer Zugeinrichtung (3) ausgestattet ist, die dazu geeignet ist, eine zuverlässige Verbindung zwischen dem Anhänger und jedem verfügbaren Zugfahrzeug, insbesondere einer Zugmaschine, herzustellen, die durch Manövrieren mit dem Anhänger in verschiedene Richtungen frei schwenkbar und gegebenenfalls auch abnehmbar ist, und außerdem mindestens zwei im Wesentlichen U-förmige Verladebrücken (4, 4', 4"), die in Längsrichtung des Anhängers voneinander getrennt angeordnet sind, auf der Lageranordnung (1) montiert sind, wobei jede von ihnen einen horizontalen Träger (40), der ausreichend starr ist, um das Gewicht der Fracht aufzunehmen, sowie ein Paar von vertikalen Trägern (40', 40") umfasst, die in der Querrichtung des Anhängers voneinander beabstandet sind und in einer Richtung weg vom Boden vorstehen und in der Lage sind, eine Fracht, wenn sie in Form eines Bündels angeordnet ist, in beiden seitlichen Bereichen des Anhängers davor zu sichern, vom Anhänger herunterzufallen, wobei die Position der Zugeinrichtung (3) auf der Lageranordnung (1) gegebenenfalls veränderbar ist und wobei eine Montageplattform (5), die zur Anbringung eines Krans und/oder einer Rahmenkonstruktion (8) mit einem Schutzgitter (81) geeignet ist, gegebenenfalls auf der Lageranordnung (1) montiert ist, **dadurch gekennzeichnet, dass** die Lageranordnung (1), die von der Antriebsanordnung (2) getragen wird und mit einer Zugeinrichtung (3) und mit mindestens zwei Verladebrücken (4, 4', 4") ausgestattet ist, die mit einem ausreichenden Abstand zueinander in der Längsrichtung des Anhängers angeordnet sind, als einheitlicher Längsschnitt eines Vierkantrohrs mit einer vorbestimmten Länge gestaltet ist, das um 45° um seine geometrische Längsachse gedreht und derart ausgerichtet ist, dass sich seine erste Diagonale des Querschnitts parallel zum Boden erstreckt, während sich die andere Diagonale senkrecht zum Boden erstreckt, wobei die Antriebsanordnung (2) in ihrem mittleren Bereich (20), gesehen in Querrichtung des Anhängers, mit einer dreieckigen, d. h. V-förmigen Nut (21) ausgestattet ist, die dazu geeignet ist, auf der einen Seite der Lageranordnung (1) in Form eines Vierkantrohrs aufzuliegen, sowie mit einem Befestigungsmittel (25) ausgestattet ist, das auch mit einer V-förmigen Nut (26) ausgestattet und dazu geeignet ist, auf der entgegengesetzten Seite des Lagerelements (1) aufzuliegen, so dass das Befestigungsmittel (25) mittels Schrauben (27', 27") in Richtung zur Antriebsanordnung (2) gepresst wird, während die Lageranordnung (1) zwischen der Antriebsanordnung (2) und dem Befestigungsmittel (25) im Bereich der V-förmigen Nuten (21, 26) verklemmt ist, und wobei jede der Verladebrücken (4, 4', 4"), gesehen in der Querrichtung des Anhängers, im mittleren Bereich ihres horizontalen Trägers (40) mit einer dreieckigen, d. h. V-förmigen Nut (41) ausgestattet ist, die dazu geeignet ist, auf der einen Seite der Lageranordnung (1) aufzuliegen, und außerdem mit einem Befestigungsmittel (45) ausgestattet ist, das auch mit einer V-förmigen Nut (46) ausgestattet ist, die dazu geeignet ist, auf der entgegengesetzten Seite der Lageranordnung (1) aufzuliegen, so dass das Befestigungsmittel (45) mittels Schrauben (47', 47") in Richtung zum horizontalen Träger (40) der Verladebrücke (4, 4', 4") gepresst wird, und die Lageranordnung (1) zwischen der Verladebrücke (4, 4', 4") und dem Befestigungsmittel (45) im Bereich der Nuten (41, 46) verklemmt ist.

2. Anhänger nach Anspruch 1, **dadurch gekennzeichnet, dass** ein sekundäres Lagerelement (6) eng in die quadratische rohrförmige Lageranordnung (1) an seinem zweiten Endbereich (12), der sich entgegengesetzt zum ersten Endbereich (11) mit der Zugeinrichtung (3) befindet, einführbar ist, wobei das sekundäre Lagerelement auch als linearer Schnitt eines Vierkantrohrs gestaltet ist und entlang der Lageranordnung (1) verschiebbar ist, auf der es in jeder gewünschten Position befestigt werden kann.

3. Anhänger nach Anspruch 2, **dadurch gekennzeichnet, dass** das sekundäre Lagerelement (6) in jeder gewünschten Position relativ zur Lageranordnung (1) mittels Schrauben (61) befestigt ist.

4. Anhänger nach einem der Ansprüche 2 oder 3, **dadurch gekennzeichnet, dass** das sekundäre Lagerelement (6) dazu geeignet ist, mindestens eine Verladebrücke (4') aufzunehmen, die mit einer V-förmigen Nut (41) ausgestattet ist und mittels eines Befestigungsmittels (45) mit einer V-förmigen Nut (46) an diesem angebracht ist, nämlich mittels Schrauben (47', 47"), die die Verladebrücke (4') und das Befestigungsmittel (46) miteinander verbinden, wodurch das sekundäre Lagerelement (6) zwischen der Verladebrücke (4') und dem Befestigungsmittel (45) verklemmt wird.

5. Anhänger nach einem der vorhergehenden Ansprüche, **dadurch gekennzeichnet, dass** zumindest die Verladebrücke (4, 4', 4"), die sich im größten Abstand zu der Zugeinrichtung (3) befindet, mit einer Lichtsignalisierungseinheit (15) ausgestattet ist, die sich im Bereich ihres horizontalen Trägers (40), in eine Richtung weg von der Zugeinrichtung (3) gewandt, befindet und im Bereich der Zugeinrichtung (3) elektrisch mit einem Zugfahrzeug verbindbar ist.

6. Anhänger nach einem der vorhergehenden Ansprüche, **dadurch gekennzeichnet, dass** in dem Endbereich (11) der Lageranordnung (1), in dem sich die Zugeinrichtung (3) befindet, der Anhänger mit einem im Wesentlichen kastenförmigen Kupplungsgehäuse (7) ausgestattet ist, wodurch das Vierkantrohr der Lageranordnung (1) von mindestens zwei seiner Seiten eingebettet ist, wobei das Kupplungsgehäuse (7) zwei horizontal ausgerichtete Bindeplatten (71, 72) umfasst, die übereinander angeordnet sind und sich parallel zueinander erstrecken, nämlich eine obere Bindeplatte (71) und eine untere Bindeplatte (72), die jeweils für sich im Bereich, wo jede zugehörige Ecke der quadratischen rohrförmigen Lageranordnung (1) aneinander anliegen, mit Nuten (710, 720) ausgestattet sind, und mindestens vier Positionierungsabstandhalter (75, 76, 77, 78) zwischen die Platten (71, 72) eingeführt sind, so dass jeder der Abstandhalter (75, 76, 77, 78) sowohl an die obere Bindeplatte (71) als auch an die untere Bindeplatte (72) geschraubt ist, und wobei jeder der Abstandhalter (75, 76, 77, 78) mit einer mittig angeordneten Nut (75, 76') ausgestattet ist, die dazu geeignet ist, mit einem rechteckigen Eckbereich jeder angrenzenden Kante der quadratischen rohrförmigen Lageranordnung (1) zusammenzuwirken, und wobei die Positionierungsabstandhalter (75, 76, 77, 78) auf eine solche Weise angeordnet sind, dass mindestens zwei Positionierungsabstandhalter (75, 76, 77, 78), die ausreichend voneinander beabstandet sind, auf jeder Seite der Lageranordnung (1) verfügbar sind.

7. Anhänger nach Anspruch 6, **dadurch gekennzeichnet, dass** die obere Bindeplatte (71) des Montagegehäuses (7) dazu geeignet ist, eine Montageplatte (73) zu tragen, die direkt auf dieser platziert ist und auch auf diese geschraubt ist.

8. Anhänger nach Anspruch 7, **dadurch gekennzeichnet, dass** die Montageplatte (73) zur Anbringung eines Krans geeignet ist, der auf die Montageplatte (73) geschraubt ist.

9. Anhänger nach Anspruch 7, **dadurch gekennzeichnet, dass** die Montageplatte (73) dazu geeignet ist, eine Rahmenkonstruktion (8) mit einem Schutzgitter (81) aufzunehmen, das mittels Schrauben an der Montageplatte (73) anbringbar ist.

10. Anhänger nach einem der vorhergehenden Ansprüche, **dadurch gekennzeichnet, dass** er außerdem mit einem teleskopischen Trägerbein (9) ausgestattet ist, das in eine Richtung zum Boden hin ausziehbar ist und dazu geeignet ist, auf dem Boden aufzuliegen, und das, ähnlich wie die Antriebsanordnung (2) und die Verladebrücken (4, 4', 4") mit einer dreieckigen, d. h. V-förmigen Nut ausgestattet ist, die dazu geeignet ist, auf der einen Seite der quadratischen rohrförmigen Lageranordnung (1) aufzuliegen, sowie mit einem Befestigungsmittel ausgestattet ist, das auch mit einer V-förmigen Nut ausgestattet und dazu geeignet ist, auf der entgegengesetzten Seite des Lagerelements (1) aufzuliegen, so dass das Befestigungsmittel mittels Schrauben in Richtung zum Trägerbein gepresst wird und die Lageranordnung (1) zwischen dem Trägerbein (9) und seinem zugehörigen Befestigungsmittel im Bereich beider, zuvor erwähnter V-förmiger Nuten verklemmt ist.

## Revendications

1. Remorque forestière, en particulier pour transporter du bois, comprenant un ensemble porteur (1), lequel est maintenu à une distance suffisante du sol et est à cette fin supporté par un ensemble d'entraînement (2) qui comprend au moins une paire de roues mutuellement coaxiales et pouvant être entraînées en rotation librement (20', 20"), lesquelles roues sont chacune en soi agencées sur chaque côté latéral de la remorque, dans laquelle ledit ensemble porteur (1) est, dans sa première zone terminale (11), muni d'un dispositif d'attelage (3), lequel est adapté pour établir une interconnexion fiable, lors d'une manœuvre avec la remorque dans diverses directions, librement pivotante et en option également amovible entre la remorque et chaque véhicule de remorquage disponible et remplaçable, en particulier un véhicule de traction tel qu'un tracteur, et en outre, au moins deux ponts de chargement espacés l'un de l'autre ou les uns des autres et sensiblement en forme de U (4, 4', 4"), dans la direction longitudinale de la remorque, sont montés sur ledit ensemble porteur (1), chacun d'eux comprenant une poutre horizontale (40), laquelle est suffisamment rigide pour prendre en charge le poids de la cargaison, de même qu'une paire de poutres verticales (40', 40"), lesquelles sont, dans une direction transversale de la remorque, espacées l'une de l'autre et font saillie dans une direction d'éloignement par rapport au sol, et disposent de la capacité d'immobiliser de façon sécurisée une cargaison, lorsque celle-ci est agencée sous la forme d'un ballot, pour l'empêcher de tomber de la remorque dans ses deux zones latérales, dans laquelle la position dudit dispositif d'attelage (3) sur l'ensemble porteur (1) peut en option être modifiée et dans laquelle une plate-forme de montage (5), qui est appropriée pour la liaison d'une grue et/ou d'une structure (8) qui est munie d'une grille de protection (81), est en option montée sur ledit ensemble porteur (1), **caractérisée en ce que** ledit ensemble porteur (1), lequel est supporté par ledit ensemble d'entraînement (2) et est muni d'un dispositif d'attelage (3) et d'au moins deux ponts de chargement (4, 4', 4") qui sont agencés à une distance suffisante l'un de l'autre ou les uns des autres dans la direction longitudinale de la remorque, est conçu en tant que section longitudinale uniforme d'un tube carré d'une longueur prédéterminée, laquelle est tournée à 45° autour de son axe géométrique longitudinal et est orientée de telle sorte que sa première diagonale de la section en coupe transversale soit étendue parallèlement au sol tandis que l'autre diagonale est étendue perpendiculairement au sol, dans laquelle ledit ensemble d'entraînement (2) est, dans sa zone centrale (20), lorsqu'il est observé dans la direction transversale de la remorque, muni d'une gorge triangulaire, c'est-à-dire en forme de V (21), laquelle est adaptée pour reposer sur le côté considéré dudit ensemble porteur (1) sous la forme d'un tube carré, de même que d'un moyen de fixation (25) ; lequel est également muni d'une gorge en forme de V (26) et est adapté pour reposer sur le côté opposé dudit ensemble porteur (1), de telle sorte que ledit moyen de fixation (25) soit mis en oeuvre au moyen de vis (27', 27") qui sont pressées en direction de l'ensemble d'entraînement (2), tandis que l'ensemble porteur (1) est bloqué entre l'ensemble d'entraînement (2) et le moyen de fixation (25) dans la zone desdites gorges en forme de V (21, 26), et dans laquelle chacun desdits ponts de chargement (4, 4', 4") est, lorsqu'il est observé dans la direction transversale de la remorque, dans la zone centrale de sa poutre horizontale (40), muni d'une gorge triangulaire, c'est-à-dire en forme de V (41), laquelle est adaptée pour reposer sur le côté considéré dudit ensemble porteur (1), et est en outre muni d'un moyen de fixation (45), lequel est également muni d'une gorge en forme de V (46), laquelle est adaptée pour reposer sur le côté opposé dudit ensemble porteur (1) de telle sorte que ledit moyen de fixation (45) soit mis en œuvre au moyen de vis (47', 47") qui sont pressées en direction de la poutre horizontale (40) du pont de chargement (4, 4', 4"), et l'ensemble porteur (1) est bloqué entre le pont de chargement (4, 4', 4") et ledit moyen de fixation (45) dans la zone desdites gorges (41, 46).

2. Remorque selon la revendication 1, **caractérisée en ce qu'**un élément porteur secondaire (6) peut être inséré de manière serrée à l'intérieur dudit ensemble porteur tubulaire carré (1) sur sa seconde zone terminale (12), laquelle est localisée à l'opposé de ladite première zone terminale (11) qui est munie du dispositif d'attelage (3), dans laquelle ledit élément porteur secondaire est également conçu en tant que section linéaire d'un tube carré et peut être déplacé le long dudit ensemble porteur (1), sur lequel il peut être fixé selon chaque position souhaitée.

3. Remorque selon la revendication 2, **caractérisée en ce que** ledit élément porteur secondaire (6) est fixé selon chaque position souhaitée par rapport à l'ensemble porteur (1) au moyen de vis (61).

4. Remorque selon l'une quelconque des revendications 2 ou 3, **caractérisée en ce que** ledit élément porteur secondaire (6) est adapté pour recevoir au moins un pont de chargement (4'), lequel est muni d'une gorge en forme de V (41) et lui est lié au moyen d'un moyen de fixation (45) qui est muni d'une gorge en forme de V (46), à savoir au moyen de vis (47', 47") qui interconnectent ledit pont de chargement (4') et le moyen de fixation (46), vis au moyen desquelles l'élément porteur secondaire (6) est bloqué entre le pont de chargement (4') et le moyen de fixation (45).

5. Remorque selon l'une quelconque des revendications précédentes, **caractérisée en ce qu'**au moins le pont de chargement (4, 4', 4") qui est localisé à la distance la plus longue par rapport au dispositif d'attelage (3) est muni d'une unité de signalisation lumineuse (15), laquelle est localisée dans la zone de sa poutre horizontale (40), selon une orientation dans une direction à distance du dispositif d'attelage (3) et peut, dans la zone du dispositif d'attelage (3), être connectée électriquement avec un véhicule de remorquage.

6. Remorque selon l'une quelconque des revendications précédentes, **caractérisée en ce que**, dans la zone terminale (11) de l'ensemble porteur (1), dans laquelle le dispositif d'attelage (3) est localisé, ladite remorque est munie d'un carter de couplage sensiblement en forme de boîte (7) au moyen duquel ledit tube carré de l'ensemble porteur (1) est intégré depuis au moins ses deux côtés, dans laquelle ledit carter de couplage (7) comprend deux plaques de liaison orientées horizontalement (71, 72), lesquelles sont agencées l'une au-dessus de l'autre et sont étendues parallèlement l'une à l'autre, à savoir une plaque de liaison de sommet (71) et une plaque de liaison de fond (72), lesquelles sont chacune en soi, dans la zone de venue en butée de chaque coin constitutif dudit ensemble porteur tubulaire carré (1), munies de gorges (710, 720), et au moins quatre espaceurs de positionnement (75, 76, 77, 78) sont insérés entre lesdites plaques (71, 72), de telle sorte que chacun desdits espaceurs (75, 76, 77, 78) soit vissé à la fois sur la plaque de liaison de sommet (71) et également sur la plaque de liaison de fond (72), et dans laquelle chacun desdits espaceurs (75, 76, 77, 78) est muni d'une gorge agencée centralement (75, 76'), laquelle est adaptée pour coopérer avec une zone de coin rectangulaire de chaque bord adjacent de l'ensemble porteur tubulaire carré (1), et dans laquelle lesdits espaceurs de positionnement (75, 76, 77, 78) sont agencés de telle sorte qu'au moins deux espaceurs de positionnement (75, 76, 77, 78), lesquels sont suffisamment espacés l'un de l'autre ou les uns des autres, soient disponibles sur chaque côté dudit ensemble porteur (1).

7. Remorque selon la revendication 6, **caractérisée en ce que** ladite plaque de liaison de sommet (71) du carter de montage (7) est adaptée pour supporter une plaque de montage (73), laquelle est placée directement sur la plaque de liaison de sommet et est également vissée sur la plaque de liaison de sommet.

8. Remorque selon la revendication 7, **caractérisée en ce que** ladite plaque de montage (73) est adaptée pour la liaison d'une grue, laquelle est vissée sur ladite plaque de montage (73).

9. Remorque selon la revendication 7, **caractérisée en ce que** ladite plaque de montage (73) est adaptée pour recevoir une structure (8) qui est munie d'une grille de protection (81), laquelle peut être liée à ladite plaque de montage (73) au moyen de vis.

10. Remorque selon l'une quelconque des revendications précédentes, **caractérisée en ce qu'**elle est en outre munie d'une béquille de support télescopique (9), laquelle peut être étendue en direction du sol et est adaptée pour reposer sur le sol et laquelle est, de façon similaire à l'ensemble d'entraînement (2) et aux ponts de chargement (4, 4', 4"), munie d'une gorge triangulaire, c'est-à-dire en forme de V, laquelle est adaptée pour reposer sur le côté considéré dudit ensemble porteur tubulaire carré (1), de même que d'un moyen de fixation, lequel est également muni d'une gorge en forme de V et est adapté pour reposer sur le côté opposé dudit ensemble porteur (1), de telle sorte que ledit moyen de fixation soit mis en œuvre au moyen de vis qui sont pressées en direction de la béquille de support, et l'ensemble porteur (1) est bloqué entre la béquille de support (9) et son moyen de fixation constitutif dans la zone des deux gorges en forme de V mentionnées précédemment.
